# EUROPÄISCHE PATENTSCHRIFT

(11) **EP 2 662 230 B1**
(45) Veröffentlichungstag und Bekanntmachung des Hinweises auf die Patenterteilung: **24.01.2018**
(21) Anmeldenummer: 12167123.4
(22) Anmeldetag: 08.05.2012
(51) Int. Cl.: B60K 1/04, H01M 2/10

(54) **Batteriegehäuse**
Battery casing
Boîtier de batterie

(43) Veröffentlichungstag der Anmeldung: 13.11.2013
(73) Patentinhaber: Magna Steyr Fahrzeugtechnik AG & Co KG, 8041 Graz (AT)
(72) Erfinder: Zachnegger, Harald, 8041 Graz (AT); Erlacher, Manuel, 9545 Radenthein (AT); Hörmann, Reinhard, 8151 Hitzendorf (AT); Rodler, Martin, 8160 Krottendorf (AT)
(74) Vertreter: Zangger, Bernd

(56) Entgegenhaltungen:
- DE-A1- 2 311 894
- FR-A1- 2 006 674
- JP-A- 6 127 456
- JP-A- 2004 345 448
- JP-A- 2004 345 451

## Beschreibung

### Gebiet der Erfindung

Die vorliegende Erfindung betrifft ein Batteriegehäuse zur Aufnahme der Innenteile einer Fahrzeugbatterie, wobei das Gehäuse zur Montage in einem Fahrzeug bestimmt ist. Weiters betrifft die Erfindung ein Batteriegehäuse mit einer Sitzschiene und eine Fahrzeugbatterie mit einem Fahrzeugsitz. Schließlich betrifft die Erfindung auch ein Verfahren zur Montage einer Fahrzeugbatterie mit einem Fahrzeugsitz in einem Fahrzeug.

### Stand der Technik

Derartige Batteriegehäuse werden insbesondere für Hochvolt-Batterien, die als Antriebsbatterien für Elektro- und Hybridfahrzeuge eingesetzt werden, genutzt. Hochvolt-Batterien sind zur Erreichung der geforderten Leistungsanforderungen üblicherweise relativ groß dimensioniert, so dass eine optimale Anordnung der Batterie mit ihrem Batteriegehäuse in einem Fahrzeug von Bedeutung ist.

Aus der DE 41 29 737 A1 ist ein elektrisch angetriebenes Fahrzeug bekannt, bei dem die Batterie vor der Hinterachse angeordnet ist. Die Batterie ist von einer umlaufenden Trägerstruktur umgeben. An der Trägerstruktur sind eine Bodenplatte und ein Deckel befestigt. Auf dem Deckel kann ein Rücksitz oder eine Rücksitzbank angeordnet sein.

Die DE 10 2011 102 019 A1 offenbart eine Batteriemontagestruktur für ein Elektromotorfahrzeug. Dabei ist eine Batterieeinheit, umfassend mehrere Batteriemodule und Batteriemontageabschnitte, bedeckt von Abdeckgliedern und unterhalb eines Fahrzeugbodens angeordnet. Auf einem rückwärtigen Bodenabschnitt des Fahrzeugbodens ist ein Rücksitz angeordnet.

Batterien die in der Nähe von Fahrzeugsitzen angeordnet sind, sind auch bekannt aus JP 6127456 A, JP 2004 345451 A, DE 23 11 894 A1 und FR 2 006 674 A1.

Die JP 2004 345 448 A offenbart eine Struktur zur Montage eines Hochspannungs-Elektrogeräts an einem Fahrzeug. Dabei ist das Hochspannungs-Elektrogerät unterhalb eines Sitzes auf einem Boden angeordnet und eine Sitzschiene ist, um den Sitz in Längsrichtung gleitbar zu tragen, an dem Hochspannungs-Elektrogerät befestigt.

Die genannten Fahrzeugbatterien sind zwar relativ platzsparend teilweise unterhalb von Fahrzeugsitzen angeordnet, jedoch ist deren Integration in den Fahrzeugaufbau gering.

### Zusammenfassung der Erfindung

Es ist eine Aufgabe der Erfindung, Batteriegehäuse der genannten Art in dieser Hinsicht zu verbessern und insbesondere ein Batteriegehäuse und eine Fahrzeugbatterie anzugeben, die optimal in ein Fahrzeug integrierbar sind. Weiters ist es eine Aufgabe der Erfindung ein geeignetes Verfahren zur Montage einer erfindungsgemäßen Fahrzeugbatterie in einem Fahrzeug anzugeben.

Die Lösung der Aufgabe erfolgt durch ein Batteriegehäuse zur Aufnahme der Innenteile einer Fahrzeugbatterie, mit zumindest einer Sitzschiene, wobei das Batteriegehäuse als tragendes Element ausgebildet ist, so dass zumindest ein Fahrzeugsitz direkt auf dem Batteriegehäuse befestigt werden kann, wobei die zumindest eine Sitzschiene an dem Batteriegehäuse befestigt ist, wobei zumindest eine Seitenwand des Batteriegehäuses eine Verstärkung aufweist, wobei die Verstärkung als Wabenstruktur ausgeführt ist.

Erfindungsgemäß ist das Batteriegehäuse einer Fahrzeugbatterie also so ausgebildet, dass zumindest ein Fahrzeugsitz direkt auf dem Batteriegehäuse befestigt werden kann. Zusätzlich zur Funktion als Gehäuse für die Fahrzeugbatterie übernimmt daher das erfindungsgemäße Batteriegehäuse eine Funktion als tragendes Element des Fahrzeugaufbaus, in dem es zugleich die Befestigung zumindest eines Fahrzeugsitzes erlaubt.

Das Batteriegehäuse beherbergt die üblichen Innenteile einer Fahrzeugbatterie, also insbesondere Batteriezellen, Kühl-/Heizelemente für die Batteriezellen, vorgefertigte Batteriemodule und/oder zumindest ein Batteriesteuergerät.

Das Batteriegehäuse ist so ausgebildet, dass es zur sicheren Aufnahme der Innenteile der Batterie in ihrem Betriebszustand tauglich ist und sieht notwendigerweise vor, dass Anschlüsse der Batterie nach außen geführt werden.

An dem Batteriegehäuse sind Sitzschienen befestigt. Das Batteriegehäuse ist daher dazu vorbereitet, dass Sitzschienen zur Lagerung zumindest eines Fahrzeugsitzes direkt auf das Gehäuse der Fahrzeugbatterie montiert werden. Bevorzugt können mehrere Fahrzeugsitze, insbesondere alle Sitze und gegebenenfalls Sitzbänke des Fahrzeuges auf dem Batteriegehäuse befestigt werden.

Erfindungsgemäß weist zumindest eine Seitenwand des Batteriegehäuses eine Verstärkung auf. Die Verstärkung ist bevorzugt derart ausgeführt, dass die verstärkte Seitenwand des Gehäuses nicht nur die Batterie schützt, sondern zusätzlich den Innenraum des Fahrzeuges bei Unfällen schützt und daher als Maßnahme zur Verringerung des Risikos bei einem Seitencrash dient.

Erfindungsgemäß ist die Verstärkung des Batteriegehäuses als Wabenstruktur ausgeführt. Die Wandung des Batteriegehäuses kann beispielsweise selbst als Wabenstruktur ausgeführt sein, oder auch durch eine zusätzliche Verstärkerplatte mit Wabenstruktur verstärkt sein.

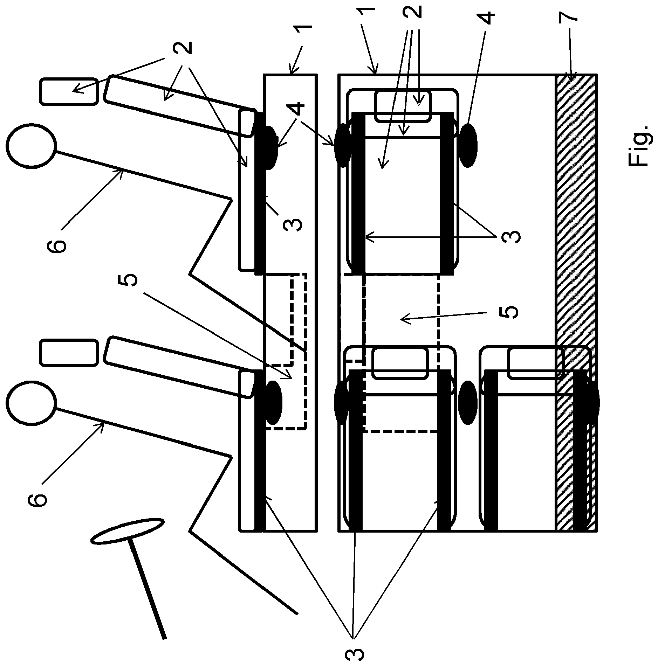

Weiterbildungen der Erfindung sind in den abhängigen Ansprüchen, der Beschreibung sowie der beigefügten Zeichnung angegeben.

Bevorzugt bildet das Batteriegehäuse mitsamt seinen Innenteilen eine Antriebsbatterie eines Elektro- oder Hybridfahrzeuges.

Bevorzugt sind an dem Batteriegehäuse Anschraubpunkte zur Befestigung der Sitzschienen ausgebildet.

Gemäß einer weiteren Ausführungsform sind an dem Batteriegehäuse Sicherheitsgurtanbindungen befestigbar. Zusätzlich zur Aufnahme zumindest eines Fahrzeugsitzes, kann am Batteriegehäuse auch zumindest eine Anbindung des Sicherheitsgurtes für diesen Sitz, insbesondere zumindest ein Gurtschloss und/oder ein Endbeschlag für einen Sicherheitsgurt, befestigt werden.

Bevorzugt sind an dem Batteriegehäuse Anschraubpunkte zur Befestigung der Sicherheitsgurtanbindungen ausgebildet.

Gemäß einer weiteren bevorzugten Ausführungsform ist an der Oberseite des Batteriegehäuses in Einbaulage zumindest eine Aussparung für zumindest einen Fußraum eines Insassen des Fahrzeuges ausgebildet. Die Oberseite weist also eine oder mehrere Einbuchtungen auf, die zur Erweiterung des Fußraumes der Passagiere des Fahrzeuges dienen.

Weiters wird die Aufgabe der Erfindung gelöst durch eine Fahrzeugbatterie umfassend ein erfindungsgemäßes Batteriegehäuse mit zumindest einem Fahrzeugsitz, wobei der zumindest eine Fahrzeugsitz an dem Batteriegehäuse befestigt ist. Der Fahrzeugsitz ist dabei üblicherweise mittelbar, insbesondere über Sitzschienen, am Batteriegehäuse befestigt.

In einem erfindungsgemäßen Verfahren zur Montage einer Fahrzeugbatterie mit zumindest einem Fahrzeugsitz in einem Fahrzeug, wird eine Fahrzeugbatterie mitsamt einem oder mehreren zuvor darauf befestigten Fahrzeugsitzen in die Karosserie des Fahrzeuges geschoben und anschließend das Batteriegehäuse im Fahrzeug befestigt. Bevorzugt wird die Einheit aus Fahrzeugbatterie und Fahrzeugsitz bzw. Fahrzeugsitzen von unten in das Fahrzeug geschoben.

### Kurzbeschreibung der Zeichnungen

Die Erfindung wird im Folgenden beispielhaft unter Bezugnahme auf die Zeichnung beschrieben.
- Fig.: ist eine schematische Darstellung eines erfindungsge-mäßen Batteriegehäuses von der Seite (obere Darstel-lung) und von oben (untere Darstellung).

### Detaillierte Beschreibung der Erfindung

In der Fig. ist ein erfindungsgemäßes Batteriegehäuse 1 dargestellt, an welchem Sitzschienen 3 für mehrere Fahrzeugsitze 2 direkt montiert sind. Dargestellt sind in der Fig. zwei vordere und ein hinterer Fahrzeugsitz 2, jeweils mit deren beiden Sitzschienen 3 in welchen die Fahrzeugsitze 2 geführt sind und mit Sicherheitsgurtanbindungen 4. Die Sicherheitsgurtanbindungen 4 sind insbesondere Gurtschlösser und/oder Endbeschläge. Zur Erweiterung des Fußraumes eines Fontpassagieres, dargestellt durch den hinteren Insassen 6, ist eine Aussparung 5 im Batteriegehäuse 1 vorgesehen. Die Aussparung 5 ist groß genug ausgebildet, so dass sich eine relevante Erweiterung des Fußraumes des hinteren Insassen 6 ergibt. Das Batteriegehäuse 1 ist an einer Seitenwand mit einer Verstärkung 7 versehen, die in der seitlichen Darstellung (oben in der Fig.) nicht dargestellt ist, da sie sich über die gesamte Fläche des Batteriegehäuses 1 erstreckt.

Die Erfindung ermöglicht somit eine optimale Integration eines Batteriegehäuses in ein Fahrzeug.

### Bezugszeichenliste

- 1: Batteriegehäuse
- 2: Fahrzeugsitz
- 3: Sitzschiene
- 4: Sicherheitsgurtanbindung
- 5: Aussparung
- 6: Insasse
- 7: Verstärkung

## Patentansprüche

1. Batteriegehäuse zur Aufnahme der Innenteile einer Fahrzeugbatterie mit zumindest einer Sitzschiene,
wobei das Batteriegehäuse (1) als tragendes Element ausgebildet ist, so dass zumindest ein Fahrzeugsitz (2) direkt auf dem Batteriegehäuse (1) befestigt werden kann, wobei an dem Batteriegehäuse (1) Mittel zur Befestigung zumindest eines Fahrzeugsitzes (2) ausgebildet sind, wobei die zumindest eine Sitzschiene (3) direkt an dem Batteriegehäuse (1) befestigt ist, **dadurch gekennzeichnet, dass** zumindest eine Seitenwand des Batteriegehäuses (1) eine Verstärkung (7) aufweist, wobei die Verstärkung (7) als Wabenstruktur ausgeführt ist.

2. Batteriegehäuse nach Anspruch 1,
**dadurch gekennzeichnet, dass** an dem Batteriegehäuse (1) Anschraubpunkte zur Befestigung der Sitzschiene (3) ausgebildet sind.

3. Batteriegehäuse nach zumindest einem der vorhergehenden Ansprüche,
**dadurch gekennzeichnet, dass** an dem Batteriegehäuse (1) Sicherheitsgurtanbindungen (4) befestigbar sind.

4. Batteriegehäuse nach Anspruch 3,
**dadurch gekennzeichnet, dass** an dem Batteriegehäuse (1) Anschraubpunkte zur Befestigung der Sicherheitsgurtanbindungen (4) ausgebildet sind.

5. Batteriegehäuse nach zumindest einem der vorhergehenden Ansprüche,
**dadurch gekennzeichnet, dass** an der Oberseite des Batteriegehäuses (1) in Einbaulage zumindest eine Aussparung (5) für zumindest einen Fußraum eines Insassen (6) des Fahrzeuges ausgebildet ist.

6. Fahrzeugbatterie umfassend ein Batteriegehäuse nach zumindest einem der vorhergehenden Ansprüche mit zumindest einem Fahrzeugsitz,
**dadurch gekennzeichnet, dass** der zumindest eine Fahrzeugsitz (2) an dem Batteriegehäuse (1) befestigt ist.

7. Verfahren zur Montage einer Fahrzeugbatterie mit zumindest einem Fahrzeugsitz nach Anspruch 6 in einem Fahrzeug,
**gekennzeichnet dadurch, dass** die Fahrzeugbatterie mitsamt dem darauf befestigten Fahrzeugsitz (2) in die Karosserie des Fahrzeuges geschoben wird und anschließend im Fahrzeug befestigt wird.

## Claims

1. Battery housing for receiving the inner portions of a vehicle battery, having at least one seat rail, wherein the battery housing (1) is formed as a bearing element, so that at least one vehicle seat (2) can be secured directly to the battery housing (1), wherein means for securing at least one vehicle seat (2) are formed on the battery housing (1), wherein the at least one seat rail (3) is secured directly to the battery housing (1), **characterized in that** at least one side wall of the battery housing (1) has a reinforcement (7), wherein the reinforcement (7) is constructed as a honeycomb structure.

2. Battery housing according to Claim 1,
**characterized in that** screwing locations for securing the seat rail (3) are formed on the battery housing (1).

3. Battery housing according to at least one of the preceding claims,
**characterized in that** safety belt connections (4) can be secured to the battery housing (1).

4. Battery housing according to Claim 3,
**characterized in that** screwing locations for securing the safety belt connections (4) are formed on the battery housing (1).

5. Battery housing according to at least one of the preceding claims,
**characterized in that** at least one recess (5) for at least one foot space of an occupant (6) of the vehicle is constructed at the upper side of the battery housing (1) in the installation position.

6. Vehicle battery comprising a battery housing according to at least one of the preceding claims, having at least one vehicle seat,
**characterized in that** the at least one vehicle seat (2) is secured to the battery housing (1).

7. Method for assembling a vehicle battery having at least one vehicle seat according to Claim 6 in a vehicle,
**characterized in that** the vehicle battery together with the vehicle seat (2) secured thereto is pushed into the bodywork of the vehicle and is subsequently secured in the vehicle.

## Revendications

1. Boîtier de batterie servant à reprendre les parties intérieures d'une batterie de véhicule et au moins un rail de siège,
le boîtier de batterie (1) étant configuré comme élément porteur de telle sorte qu'au moins un siège (2) du véhicule puisse être fixé directement sur le boîtier de batterie (1),
des moyens de fixation d'au moins un siège (2) du véhicule étant formés sur le boîtier de batterie (1),
le ou les rails de siège (3) étant fixés directement sur le boîtier de batterie (1),
**caractérisé en ce que**
au moins une paroi latérale du boîtier de batterie (1) présente un renfort (7) et
**en ce que** le renfort (7) est réalisé comme structure en nid d'abeilles.

2. Boîtier de batterie selon la revendication 1, **caractérisé en ce que** des points de vissage servant à fixer le rail de siège (3) sont formés sur le boîtier de batterie (1).

3. Boîtier de batterie selon au moins l'une des revendications précédentes, **caractérisé en ce que** des liaisons (4) pour ceinture de sécurité peuvent être fixées sur le boîtier de batterie (1).

4. Boîtier de batterie selon la revendication 3, **caractérisé en ce que** des points de vissage permettant de fixer les liaisons (4) de ceinture de sécurité sont formés sur le boîtier de batterie (1).

5. Boîtier de batterie selon au moins l'une des revendications précédentes, **caractérisé en ce qu'**au moins une découpe (5) pour au moins un espace de pied d'un passager (6) du véhicule est formée sur les côtés du boîtier de batterie (1) situés en haut en position de montage.

6. Batterie pour véhicule comprenant un boîtier de batterie selon au moins l'une des revendications précédentes et au moins un siège de véhicule, **caractérisée en ce que** le ou les sièges (2) du véhicule sont fixés sur le boîtier de batterie (1).

7. Procédé de montage d'une batterie de véhicule présentant au moins un siège de véhicule selon la revendication 6 dans un véhicule, **caractérisé en ce que** la batterie pour véhicule est glissée dans la carrosserie du véhicule en même temps que le siège (2) du véhicule qui y est fixé, et est ensuite fixée dans le véhicule.
